# EUROPEAN PATENT SPECIFICATION

(11) **EP 2 966 979 B1**
(45) Date of publication and mention of the grant of the patent: **22.08.2018**
(21) Application number: 14711019.1
(22) Date of filing: 10.03.2014
(51) Int. Cl.: A01G 27/00, A01G 29/00

(54) **PAD FOR STORAGE AND DELIVERY OF WATER IN A HOUSEPLANT POT OR IN THE SOIL**
KISSEN ZUR SPEICHERUNG UND ABGABE VON WASSER IN EINEM ZIMMERPFLANZENTOPF ODER IM BODEN
COUSSINET POUR LE STOCKAGE ET LA DÉLIVRANCE D'EAU DANS UN POT DE PLANTE D'INTÉRIEUR OU DANS LE SOL

(30) Priority: 11.03.2013 NL 2010420
(43) Date of publication of application: 20.01.2016
(73) Proprietor: Van Den Ende, Peter Hubertus Elisabeth, 6411 DN Heerlen (NL)
(72) Inventor: Van Den Ende, Peter Hubertus Elisabeth, 6411 DN Heerlen (NL)
(74) Representative: Verhees, Godefridus Josephus Maria
(86) International application number: PCT/NL2014/050141
(87) International publication number: WO 2014/142654

(56) References cited:
- EP-A1- 0 165 112
- EP-A1- 0 572 728
- WO-A1-94/26093
- WO-A2-2007/084550
- FR-A1- 2 630 293
- GB-A- 1 206 231
- US-A1- 2006 235 360
- US-A1- 2007 167 327

## Description

### Field of the invention

The invention relates to a pad for storage and delivery of water in a houseplant pot or in the soil, comprising a water and root permeable layer formed by a separation sheet and hydrating gel attached to at least one side of the separation sheet in an at any rate substantially evenly spread manner which separation sheet comprises a paper, cardboard or biodegradable plastic layer or a layer of flax. A houseplant pot in this respect is understood to mean not only a pot but a plant box or a polybag, and in the soil is understood to mean in beds or in full soil. With respect to hydrating gel one may think of for example gel pellets or gel powder either water swellable or not.

### State of the art

A pad of this type is known from WO2007/084550A. In this known pad the water and root permeable layera are formed by cellulose sheets. The pad is put on the bottom of a houseplant pot after which soil or substrate is added and a plant is potted in the soil or in the substrate. During the watering operation the water penetrates through one of the layers into the gel which expands as a result. After some period of time the roots of the plant grow through one of the layers into the gel and can thus take up moisture from the gel. In consequence, there is no need to water the plant for an longer period of time than normal (that is to say without the presence of the pad). In this respect it is important for the gel to be spread evenly over the bottom of the pot so as to have a gel layer of a constant thickness, so that also the roots can grow evenly spread over the pot. It should be avoided that the water flows off via the bottom of the pot through a thin part of the gel layer or a part where there is no gel layer at all.

### Summary of the invention

It is an object of the invention to provide a pad of the type defined in the opening paragraph of which at least one of the layers is stronger and slower biodegradable than the layers of the known pad. For this purpose the pad according to the invention is characterized in that a layer of jute is attached to the separation sheet. Since the gel is attached to the separation sheet and evenly spread over the separation sheet, a layer of gel of constant thickness will evolve after the swelling of the gel, so that no further measures need be taken to obtain an evenly spread layer of gel. The pad may be put on the bottom of the houseplant pot or in the soil. The plant(s), cuttings, seeds or bulb(s) may be put in the soil or in the substrate prior to or after watering. The roots of the plant will grow into the gel layer located at the bottom of the houseplant pot or soil and extract (feeding) water from the gel layer for a long period of time so that watering needs to be done less frequently. Preferably, the pad is placed gel downwards so that the separation sheet protects the gel from the soil put on top of it and/or the substrate put on top of it. The gel is preferably an air-permeable gel so that the roots also with their extremities grown into the gel can continue to extract oxygen. Furthermore, the gel is preferably glued to the separation sheet.

When the pad is used in a houseplant pot and before the pad is being watered, the houseplant pot is preferably but not necessarily placed on a saucer which has a raised peripheral edge, or placed in a flower pot. After the watering the water stays behind on the saucer or in the flower pot and the gel has ample time for absorbing the water.

The jute provides strength of the separation sheet and ensures that after the paper, cardboard or biodegradable plastic layer or the layer of flax is degraded the separation is maintained between the gel and the soil present on top of it and/or the substrate present on top of it.

The jute is preferably glued to the paper, cardboard or biodegradable plastic layer or the layer of flax.

An advantageous embodiment of the pad according to the invention is characterized in that the pad further includes a protective sheet which is attached to the gel and/or to the at least one side of the separation sheet, where the gel is located between the separation sheet and the protective sheet. The protective sheet diminishes the chance of the gel coming loose from the separation sheet during the handling of the pad.

The protective sheet is preferably glued to the gel and/or to the separation sheet or high-temperature molten on it.

The protective sheet is preferably comprised of a layer of paper, cardboard, flax or biodegradable plastic. In the case of a biodegradable plastic layer, it may be for example a high-temperature coating. The protective sheet may also be comprised of more than one layer.

A still further advantageous embodiment of the pad according to the invention is characterized in that the protective sheet is also comprised of a root-permeable material, so that it does not matter which side of the pad is turned on top.

A further embodiment of the pad according to the invention is characterized in that in addition to the gel also nourishing substances and/or seed are connected to the separation sheet and/or in that the separation sheet and/or protective sheet is comprised of a layer of biobased substrate and/or fertilizing substance.

The layer of glue used is preferably comprised of one or more of the following substances: (potato) starch (solvitose), yucca, sachapapa, canton potato, caimito and boniato and is preferably fully biodegradable.

### Brief description of the drawings

The invention will be described below in more detail based on examples of embodiment of the pad according to the invention represented in the drawing figures, in which:
Fig. 1 shows an elementary embodiment of the pad according to the invention;
Fig. 2 shows a preferred embodiment of the pad according to the invention;
Fig. 3 shows the filling of a houseplant pot with the pad shown in Fig. 2 and with soil and/or substrate;
Fig. 4 shows the swelling by watering of the gel pellets in the houseplant pot shown in Fig. 3;
Fig. 5 shows the potting of a plant in the houseplant pot shown in Fig. 4; and
Fig. 6 shows the pad shown in Fig. 2 used in the soil.

### Detailed description of the drawings

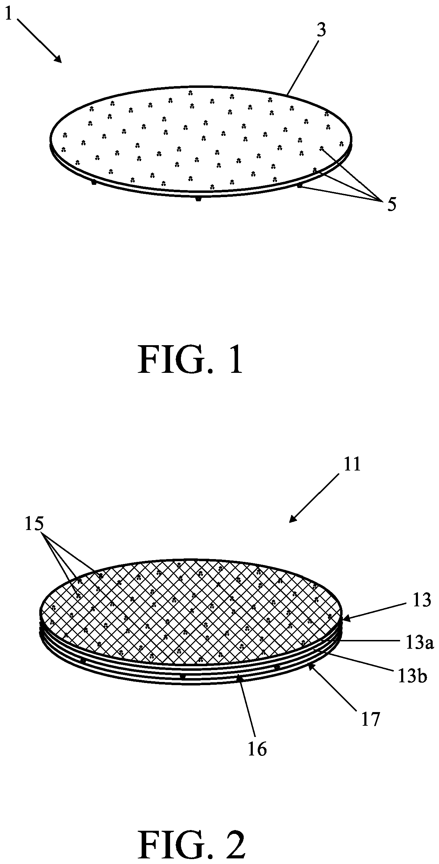

Fig. 1 shows a most elementary embodiment of the pad according to the invention. The pad 1 is comprised of a root-permeable separation sheet 3 having gel pellets 5 glued to the bottom of it which are evenly spread over the surface of the bottom. The separation sheet 3 is so soft and/or weak or becomes so weak by watering that roots can grow through it. If so desired nourishing pellets may also be glued to the bottom and/or top of the separation sheet 3. The separation sheet is preferably comprised of paper, for example craft paper, cardboard, flax or biodegradable plastic. The gel pellets are made of a fully biodegradable material, for example biopolymers. As a glue is used for example potato starch (solvitose) or yucca powder which has excellent gluing properties when watered.

Fig. 2 shows a preferred embodiment of the pad according to the invention. The pad 11 is comprised of a root-permeable separation sheet 13 and a protective sheet 17 with evenly spread gel pellets 15 in between which, optionally together with nourishing pellets, form layer 16. The separation sheet 13 is comprised of two layers. A first layer 13a is formed by a sheet of jute and a second layer 13b is formed by a sheet of paper, cardboard, flax or biodegradable plastic. The second layer is preferably formed by a sheet of craft paper. The gel pellets are made of a fully biodegradable material, for example, biopolymers. The two layers 13a and 13b are glued together via a layer of glue on the sides facing each other. Gel pellets 15 are glued to the other side of the sheet 13b. The protective sheet 17 is formed by a sheet of paper, cardboard or biodegradable plastic, preferably also by a sheet of craft paper and is glued to the gel pellets and the separation sheet 13 via another layer of glue. The layers of glue are preferably completely constituted by yucca.

In addition to the gel pellets it is also possible for nourishing pellets and/or seed to be glued to the separation sheet 13 or be incorporated in the separation sheet. More particularly when the separation sheet and/or protective sheet is comprised of flax, the seed may also be incorporated in the sheet instead of being glued to it. The separation sheet 13 and/or protective sheet 17 may also comprise biobased substrate and/or fertilizing substance. This substrate and/or fertilizing substance may be incorporated in the separation sheet and/or protective sheet or form part of it as a separate layer.

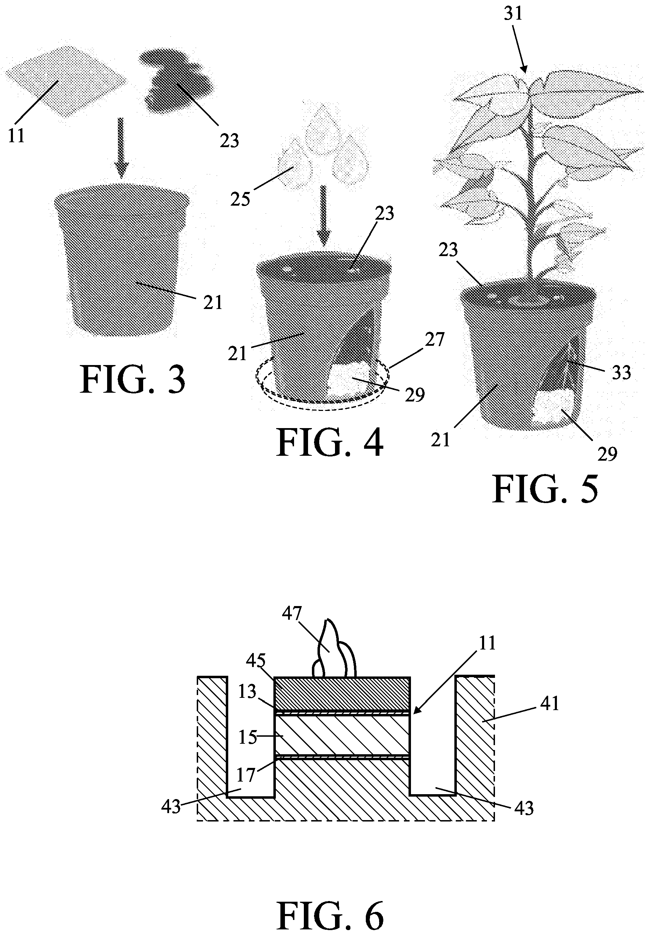

Figs. 3, 4 and 5 show successive steps in the method of constituting a water retaining layer in a houseplant pot 21. The bottom of the houseplant pot has holes in it. First of all the pad 11 is positioned on the bottom of the houseplant pot 21 with the root-permeable separation sheet 13 turned upwards. Subsequently, the soil/substrate 23 is placed on the pad in the houseplant pot, see Fig. 3.

Then water 25 is added to the pad so as to have the gel pellets swell/saturate, see Fig. 4. Before (nourishing) water is added, the houseplant pot is preferably but not necessarily placed on a saucer 27 provided with a raised peripheral edge (shown in a dotted line) or in an outer pot or tray so that the gel pellets are situated in a layer of water and thus have sufficient water and time to fully swell/saturate. Part of the side wall of the houseplant pot 21 has been omitted in Fig. 4 for clarity. The swollen gel pellets constitute a water retaining and air permeable gel layer 29 at the bottom of the houseplant pot.

After this a plant 31 can be potted in the soil, see Fig. 5, or seeds or bulbs can be inserted into the soil/substrate. The roots 33 of the plant will grow into the gel layer 29 passing through the protective sheet 13 (not shown in Fig. 4). The gel layer retains the water and the roots extract this (nourishing) water from the gel in proportion to the extraction/evaporation for a relatively long period of time. The nourishing substance that may be available may be sufficient to nourish the plant for several weeks.

Fig. 6 shows the use of the pad 11 in the soil 41. In this figure is shown a section of the bottom where a bed of soil is formed having an irrigation slot 43 on either one of the two sides. The pad 11 is situated in a swollen state of the gel pellets 15 in the bed of soil. A layer of substrate 45 in which a plant 47 is cultivated is situated on the separation sheet 13 of the pad. The protective sheet 17 is located underneath the swollen gel pellets 15. For any further applications in the soil the reader may be referred to EP 1 139 716 A1 where the gel shown in that document is to be replaced by a pad.

Albeit the invention has been described in the foregoing with reference to the drawings, it should be observed that the invention is not by any manner or means restricted to the embodiments shown in the drawings. The invention also extends to all embodiments deviating from the embodiments shown in the drawings within the scope defined by the claims. For example, many variations to the pad shown in Fig. 2 are possible, such as for example a pad comprising a sheet of flax with gel pellets glued to one side of it and seed glued to the other side and glued to each side of it a sheet of paper, cardboard or biodegradable plastic. The gel pellets and the seed are then positioned between the sheet of flax and the sheets of paper, cardboard or biodegradable plastic. One of the sheets of paper, cardboard or biodegradable plastic then constitutes the separation sheet and the other sheet of paper, cardboard or biodegradable plastic then constitutes the protective sheet. The sheet of flax hereby forms an intermediate layer and preferably contains nourishing substance. In lieu of an intermediate layer of flax, the intermediate layer may also comprise rockwool or a different substrate. Again a layer of jute may be glued to the separation sheet and/or protective sheet.

## Claims

1. A pad for storage and delivery of water in a houseplant pot or in the soil, comprising a water and root permeable layer formed by a separation sheet (3; 13) and hydrating gel (15) attached to at least one side of the separation sheet in an at any rate substantially evenly spread manner, which separation sheet (3; 13) comprises a paper, cardboard or biodegradable plastic layer or a layer of flax, **characterized in that** a layer of jute (13a) is attached to the separation sheet.

2. A pad as claimed in claim 1, **characterized in that** the gel (15) is glued to the separation sheet (3; 13).

3. A pad as claimed in claim 1 or 2, **characterized in that** the layer of jute is glued to the paper, cardboard or biodegradable plastic layer or the layer of flax.

4. A pad as claimed in any one of the preceding claims, **characterized in that** the pad (11) further includes a protective sheet (17) which is affixed to the gel (15) and/or to the at least one side of the separation sheet (13), where the gel is located between the separation sheet and the protective sheet.

5. A pad as claimed in claim 4, **characterized in that** the protective sheet (17) is glued to the gel (15) and/or to the separation sheet (13).

6. A pad as claimed in claim 4, **characterized in that** the protective sheet (17) is molten to the gel (15) and/or to the separation sheet (13) by means of high-temperature melting.

7. A pad as claimed in claim 4, 5 or 6, **characterized in that** the protective sheet (17) is comprised of a layer of paper, cardboard, flax or biodegradable plastic.

8. A pad as claimed in claim 4, 5, 6 or 7, **characterized in that** the protective sheet (17) is also comprised of a root permeable material.

9. A pad as claimed in any one of the preceding claims, **characterized in that** in addition to the gel (15) also nourishing substances and/or seed are connected to the separation sheet (3; 13).

10. A pad as claimed in any one of the preceding claims, **characterized in that** the separation sheet (3; 13) and/or protective sheet (17) is comprised of a low biobased substrate and/or fertilizing substance.

11. A pad as claimed in claim 2, 3 or 5, **characterized in that** the layer of glue comprises one or more of the following substances: starch, yucca, sachapapa, canton potato, caimito and boniato.

## Patentansprüche

1. Speicherkissen für die Aufnahme und Abgabe von Wasser in einem Pflanzentopf oder im Boden, das aus einer wasser- und wurzeldurchlässigen Schicht aufgebaut ist, die durch ein Trennvlies (3; 13) sowie ein hydratisierendes Gel (15) gebildet wird, das in gleichmäßiger Verteilung auf mindestens einer Seite des Trennvlieses angebracht ist, wobei das Trennvlies (3; 13) eine Lage umfasst, die aus Papier, Karton oder biologisch abbaubarem Kunststoff oder aber aus Flachs besteht, **dadurch gekennzeichnet, dass** auf dem Trennvlies eine Lage Jute (13a) angebracht ist.

2. Speicherkissen nach Anspruch 1, **dadurch gekennzeichnet, dass** das Gel (15) auf das Trennvlies (3; 13) aufgeklebt ist.

3. Speicherkissen nach Anspruch 1 oder 2, **dadurch gekennzeichnet, dass** die Jute-Lage auf die aus Papier, Karton oder biologisch abbaubarem Kunststoff bestehende Lage oder auf die Flachslage aufgeklebt ist.

4. Speicherkissen nach einem der vorangegangenen Ansprüche, **dadurch gekennzeichnet, dass** das Kissen (11) ferner ein Schutzvlies (17) umfasst, das auf der Seite des Gels (15) und/oder auf der mindestens einen Seite des Trennvlieses (13) befestigt ist, wobei das Gel zwischen dem Trennvlies und dem Schutzvlies angeordnet ist.

5. Speicherkissen nach Anspruch 4, **dadurch gekennzeichnet, dass** das Schutzvlies (17) auf das Gel (15) und/oder auf das Trennvlies (13) aufgeklebt ist.

6. Speicherkissen nach Anspruch 4, **dadurch gekennzeichnet, dass** das Schutzvlies (17) mittels hoher Temperatur auf das Gel (15) und/oder auf das Trennvlies (13) aufgeschmolzen ist.

7. Speicherkissen nach einem der Ansprüche 4, 5 oder 6, **dadurch gekennzeichnet, dass** das Schutzvlies (17) eine aus Papier, Karton, Flachs oder biologisch abbaubarem Kunststoff bestehende Lage umfasst.

8. Speicherkissen nach einem der Ansprüche 4, 5, 6 oder 7, **dadurch gekennzeichnet, dass** das Schutzvlies (17) ebenfalls aus einem wurzeldurchlässigen Material besteht.

9. Speicherkissen nach einem der vorangegangenen Ansprüche, **dadurch gekennzeichnet, dass** neben dem Gel (15) auch Nährstoffe und/oder Samen mit dem Trennvlies (3; 13) verbunden sind.

10. Speicherkissen nach einem der vorangegangenen Ansprüche, **dadurch gekennzeichnet, dass** das Trennvlies (3; 13) und/oder das Schutzvlies (17) eine Schicht biogenes Substrat und/oder Düngemittel umfasst.

11. Speicherkissen nach einem der Ansprüche 2, 3 oder 5, **dadurch gekennzeichnet, dass** die Klebstoffschicht eine oder mehrere der folgenden Substanzen enthält: (Kartoffel-)Stärke (Solvitose), Yuca, Sacha Papa, Canton Potato, Caimito und Süßkartoffel.

## Revendications

1. Coussinet pour stocker et transmettre de l'eau dans un pot horticole ou dans le sol, comprenant une couche perméable à l'eau et perméable aux racines, laquelle couche est formée d'un feuillet de séparation (3;13) ainsi que d'un gel hydratant (15) qui est fixé et uniformément réparti sur au moins une face du feuillet de séparation, lequel feuillet de séparation (3;13) comprend une couche en papier, en carton ou en plastique biodégradable ou une couche de lin, **caractérisé en ce qu'**une couche de jute appliquée (13a) est fixée au feuillet de séparation.

2. Coussinet selon la revendication 1, **caractérisé en ce que** le gel (15) est collé sur le feuillet de séparation (3;13).

3. Coussinet selon la revendication 1 ou 2, **caractérisé en ce que** la couche de jute est collée à la couche de papier, de carton ou de plastique biodégradable ou à la couche de lin.

4. Coussinet selon une des revendication précédentes, **caractérisé en ce que** le coussinet (11) comprend de plus un feuillet de blindage (17), qui est fixé au gel (15) et/ou à au moins ladite face du feuillet de séparation (13), et le gel se trouve entre le feuillet de séparation et le feuillet de blindage.

5. Coussinet selon la revendication 4, **caractérisé en ce que** le feuillet de blindage (17) est collé sur le gel (15) et/ou sur le feuillet de séparation (13).

6. Coussinet selon la revendication 4, **caractérisé en ce qu'**on fait fondre le feuillet de blindage (17) sur le gel (15) et/ou sur le feuillet de séparation (13) à haute température.

7. Coussinet selon la revendication 4, 5 ou 6, **caractérisé en ce que** le feuillet de blindage (17) comprend une couche de papier, de carton, de lin ou de plastique biodégradable.

8. Coussinet selon la revendication 4, 5, 6 ou 7, **caractérisé en ce que** le feuillet de blindage (17) est également en matériau perméable aux racines.

9. Coussinet selon une des revendication précédentes, **caractérisé en ce qu'**en plus du gel (15), des éléments nutritifs et/ou des graines sont également reliés au feuillet de séparation (3;13).

10. Coussinet selon une des revendication précédentes, **caractérisé en ce que** le feuillet de séparation (3;13) et/ou le feuillet de blindage (17) comprend une couche de substrat biosourcé et/ou d'engrais.

11. Coussinet selon la revendication 2, 3 ou 5, **caractérisé en ce que** la couche de colle comprend une ou plusieurs des substances suivantes : fécule (de pomme de terre) (solvitose), yuca, igname couche-couche, pomme de terre canton, caimito et patate douce.
